# EUROPÄISCHE PATENTSCHRIFT

(11) **EP 3 162 187 B1**
(45) Veröffentlichungstag und Bekanntmachung des Hinweises auf die Patenterteilung: **25.04.2018**
(21) Anmeldenummer: 16191134.2
(22) Anmeldetag: 28.09.2016
(51) Int. Cl.: A01F 15/07

(54) **RUNDBALLENPRESSE FÜR HALMGUT**
ROUND BALER FOR STALK
PRESSE A BALLES RONDES POUR FOURRAGE

(30) Priorität: 30.10.2015 AT 509212015
(43) Veröffentlichungstag der Anmeldung: 03.05.2017
(73) Patentinhaber: Göweil Maschinenbau GmbH, 4202 Kirchschlag (AT)
(72) Erfinder: Göweil, Herbert, 4202 Kirchschlag (AT)
(74) Vertreter: Patentanwaltskanzlei Hübscher

(56) Entgegenhaltungen:
- EP-A1- 1 602 270
- DE-A1- 3 314 314
- GB-A- 2 105 644
- US-B1- 6 272 825

## Beschreibung

Die Erfindung bezieht sich auf eine Rundballenpresse für Halmgut mit einem auf einem Fahrgestell angeordneten Pressgehäuse, das einen fahrgestellfesten Gehäuseteil und eine an diesem Gehäuseteil um eine obere Anlenkachse aufschwenkbar gelagerte Auswurfklappe aufweist, mit auf den fahrgestellfesten Gehäuseteil und die Auswurfklappe verteilten, eine Presskammer umfangsseitig begrenzenden, mit einem Antrieb verbundenen Presswalzen und mit einer Einrichtung zum Ummanteln der gepressten Halmgutballen mit einer Hülle.

Zum Herstellen von Rundballen aus landwirtschaftlichem Halmgut werden Rundballenpressen eingesetzt, die ein auf einem Fahrgestell angeordnetes Pressgehäuse mit einer Presskammer aufweisen, deren Mantel aus antreibbaren, im Pressgehäuse gelagerten Presswalzen gebildet wird (EP 1 602 270 A1). Das mittels eines Aufnahmeförderers beim Überfahren vom Boden aufgenommene Halmgut wird gegebenenfalls nach einer Zerkleinerung zwischen zwei Presswalzen in die Presskammer gefördert und durch die angetriebenen Presswalzen umgewälzt und zu einem Ballen gewickelt, der durch die laufende Zufuhr des sich in Windungsform außen an den bereits gebildeten Wickel anlegenden Halmguts zunehmend verdichtet wird. Der auf diese Weise gebildete Rundballen wird dann innerhalb der Presskammer mit einer Folie oder einem Netz ummantelt, bevor er ausgeworfen wird. Zu diesem Zweck ist das Pressgehäuse in einen fahrgestellfesten Gehäuseteil und eine um eine obere Anlenkachse an diesem aufschwenkbar gelagerte Auswurfklappe unterteilt. Da die Umlaufbewegung des Halmguts in der geschlossenen Presskammer eine Aufwärtsförderung des Halmguts im Bereich der Auswurfklappe bedingt und durch die unteren Presswalzen des fahrgestellfesten Gehäuseteils der ummantelte Rundballen beim Öffnen der Auswurfklappe aus dem Pressgehäuse ausgetragen wird, drehen sich der aus dem Pressgehäuse rollende Rundballen und die Presswalzen der Auswurfklappe gleichsinnig mit der Folge, dass die endseitige Presswalze, die die durch die Auswurfklappe gebildete Auswurföffnung begrenzt und beim Öffnen der Auswurfklappe am ausrollenden Rundballen anliegt, im Anliegebereich gegensinnig zur Bewegung der Oberfläche des Rundballens angetrieben wird. Die damit verbundene zusätzliche Belastung der den Rundballen ummantelnden Hülle, die bereits aufgrund des Verdichtungsdrucks des Rundballens erheblichen Zugspannungen ausgesetzt ist, bringt die Gefahr einer Überlastung der Hülle und damit eines unzureichenden Zusammenhalts des Rundballens mit sich.

Der Erfindung liegt somit die Aufgabe zugrunde, eine Rundballenpresse so auszugestalten, dass der fertige Rundballen ohne Gefährdung seiner Mantelhülle aus dem Pressengehäuse ausgetragen werden kann.

Ausgehend von einer Rundballenpresse der eingangs geschilderten Art löst die Erfindung die gestellte Aufgabe dadurch, dass die eine Auswurföffnung für den ummantelten Halmgutballen begrenzende Presswalze der Auswurfklappe über eine Schaltkupplung vom Antrieb abkuppelbar ist.

Da zufolge dieser Maßnahme der Antrieb der die Auswurföffnung begrenzenden Presswalze der Auswurfklappe über die Schaltkupplung abgeschaltet werden kann und aufgrund dieser Abschaltung diese Presswalze frei drehbar ist, liegt die Auswurfklappe des Pressgehäuses mit dieser frei drehbaren Presswalze am aus dem Pressgehäuse ausrollenden Rundballen an, wenn die Auswurfklappe geöffnet wird. Dies bedeutet, dass über die frei drehbare Presswalze lediglich Druckkräfte auf den Rundballen ausgeübt werden können, was aufgrund des auf die Hülle radial nach außen wirkenden Drucks des gepressten Halmguts zu keiner Mehrbelastung, sondern eher zu einer Entlastung der Hülle führt. Zumindest kann die sonst bestehende Gefahr einer Überlastung der Hülle vermieden und damit gesichert werden, dass der Rundballen durch die Hülle in seiner Form zusammengehalten wird.

Wird die Schaltkupplung für die die Auswurföffnung begrenzende Presswalze in Abhängigkeit vom Öffnungswinkel der Auswurfklappe betätigt, so kann in einfacher Weise das rechtzeitige Abkuppeln der die Auswurföffnung beim Öffnen der Auswurfklappe begrenzenden Presswalze vom Presswalzenantrieb gewährleistet werden. Wird die Auswurfklappe nach dem Auswurf des ummantelten Rundballens zur Bildung eines neuen Rundballens wieder geschlossen, so muss die endseitige Presswalze über die Schaltkupplung wieder mit dem Antrieb verbunden werden.

In der Zeichnung ist der Erfindungsgegenstand beispielsweise dargestellt. Es zeigen
- Fig. 1: eine erfindungsgemäße Rundballenpresse für Halmgut in einer zum Teil aufgerissenen schematischen Seitenansicht bei geschlossenem Pressgehäuse,
- Fig. 2: diese Rundballenpresse in einer zum Teil aufgerissenen Seitenansicht mit einer zum Teil geöffneten Auswurfklappe,
- Fig. 3: einen Schnitt nach der Linie III-III der Fig. 1 im Bereich der Schaltkupplung für die die Auswurföffnung begrenzende Presswalze der Auswurfklappe in einem größeren Maßstab und
- Fig. 4: eine der Fig. 3 entsprechende Darstellung mit geöffneter Schaltkupplung zwischen dem Antrieb und der Presswalze.

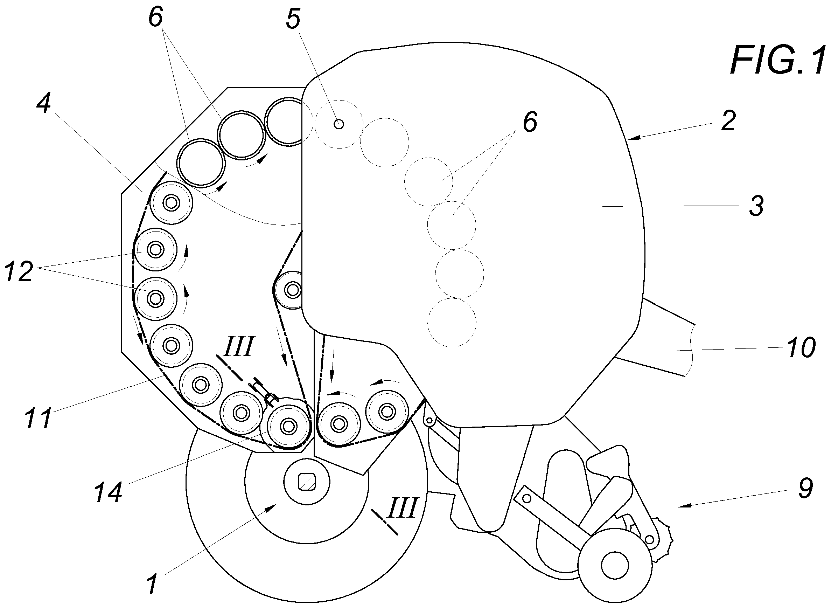

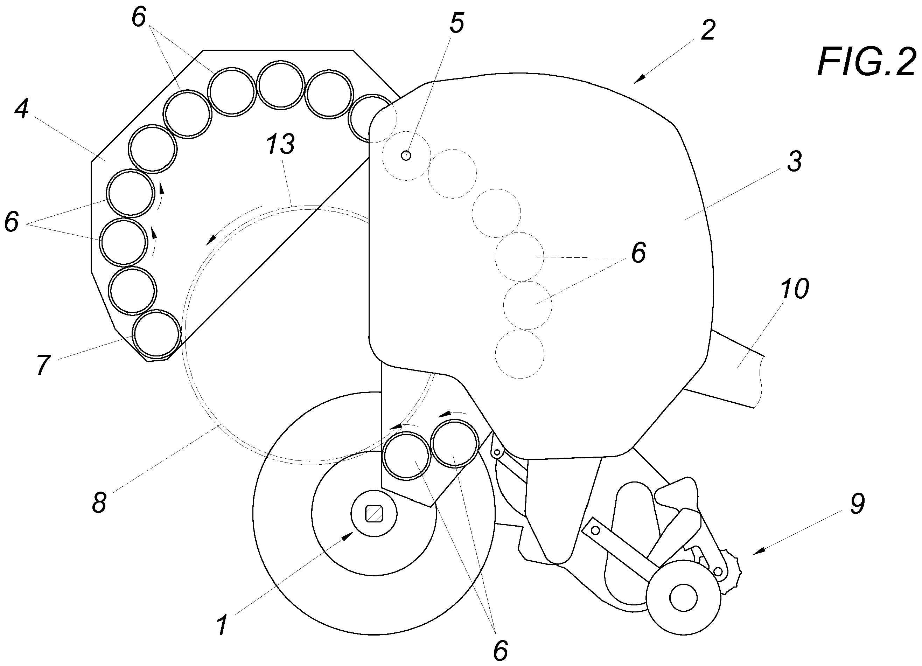

Die Rundballenpresse nach den Fig. 1 und 2 weist ein auf einem Fahrgestell 1 angeordnetes Pressgehäuse 2 auf, das in einen fahrgestellfesten Gehäuseteil 3 und eine Auswurfklappe 4 unterteilt ist, die um eine obere Anlenkachse 5 am fahrgestellfesten Gehäuseteil 3 aufschwenkbar gelagert ist. Das Pressgehäuse 2 umfasst eine Presskammer, die umfangsseitig durch angetriebene Presswalzen 6, 7 begrenzt wird. Das zu einem Rundballen 8 aufzuwickelnde und zu verdichtende Halmgut wird durch einen Aufnahmeförderer 9 vom Boden aufgenommen und gegebenenfalls nach einer Zerkleinerung zwischen zwei einen Einlass bildenden Presswalzen 6 in die Presskammer gefördert, wenn die mittels einer Deichsel 10 beispielsweise an einen Ackerschlepper angehängte Rundballenpresse über das auf einem Feld liegende Halmgut gezogen wird.

Der Antrieb der Presswalzen 6, 7 erfolgt in herkömmlicher Weise über eine aus Übersichtlichkeitsgründen nicht dargestellte Zapfwelle, wobei die einzelnen Presswalzen 7 mit außerhalb der Presskammer vorgesehenen, durch eine Kette 11 antreibbaren Kettenrädern 12 versehen sind. Wie der Fig. 1 entnommen werden kann, ist der Kettenverlauf so gestaltet, dass die Auswurfklappe 4 ohne Unterbrechung des Antriebs der der Auswurfklappe 4 zugeordneten Presswalzen 6, 7 hochgeschwenkt werden kann. Aufgrund dieses Presswalzenantriebs wird das über den Aufnahmeförderer 9 in die Presskammer eingebrachte Halmgut zunächst von den an den Presskammereinlass anschließenden unteren Presswalzen 6 des fahrgestellfesten Gehäuseteils 3 der endseitigen Presswalze 7 der Auswurfklappe 4 zugefördert, bevor es durch die anschließenden Presswalzen 6 entlang der Auswurfklappe 4 in einer Umlaufbewegung hochgefördert wird, um durch die Presswalzen 6 des Gehäuseteils 3 wieder abwärts geführt zu werden. Das über den Aufnahmeförderer 9 zugeführte Halmgut wird somit Windung für Windung zu einem Halmgutwickel aufgewickelt und mit zunehmendem Wickeldurchmesser zunehmend verdichtet, bis der fertige Rundballen 8 durch eine Folie oder ein Netz ummantelt wird, um das Halmgut in Form eines verdichteten Rundballens 8 festzuhalten. Die zur Ummantelung vorgesehene Hülle 13 wird in herkömmlicher Weise in die Presskammer eingeführt und um den Halmgutwickel gewunden, bevor die Auswurfklappe 4 zum Austragen des ummantelten Rundballens 8 hochgeschwenkt wird.

Wie der Fig. 2 entnommen werden kann, legt sich der beim Öffnen der Auswurfklappe 4 aus dem Pressgehäuse 2 ausrollende Rundballen 8 an die endseitige Presswalze 7 an, die die sich bildende Auswurföffnung begrenzt, was bei einem fortlaufenden Antrieb dieser Presswalze 7 zu einer entgegen der Bewegungsrichtung der Oberfläche des Rundballens 8 verlaufenden Bewegung der Presswalze 7 im Anliegebereich führen würde. Um die mit einer solchen Antriebsbewegung der Presswalze 7 verbundenen, zusätzlichen Belastungen der den Rundballen 8 ummantelnden Hülle 13 zu vermeiden, wird die endseitige Presswalze 7 durch eine Schaltkupplung 14 vom Antrieb abgekuppelt, sodass die Presswalze 7 frei drehbar gehalten wird und vom Rundballen 8 entgegen dem Drehsinn der übrigen Presswalzen 6 mitgenommen werden kann. Aufgrund dieser Drehmitnahme der Presswalze 7 durch den Rundballen 8 werden zusätzliche Zugspannungen der den Rundballen 8 ummantelnden Hülle 13 vermieden und damit die Gefahr einer Überlastung der Hülle 13 ausgeschlossen.

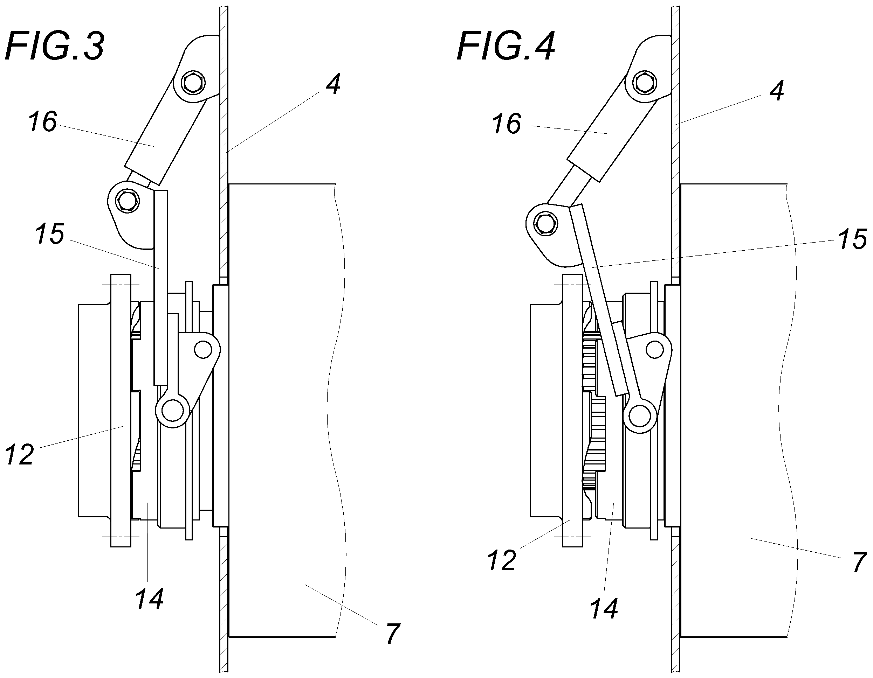

In den Fig. 3 und 4 ist die Schaltkupplung 14 zwischen der Presswalze 7 und dem zugehörigen Kettenrad 12 des Presswalzenantriebs näher dargestellt. Diese Schaltkupplung 14 ist als Klauenkupplung ausgebildet, die über eine Schaltgabel 15 mittels eines Schaltzylinders 16 betätigt wird. Wird der Schaltzylinder 16 beaufschlagt, so wird die Schaltkupplung 14 aus der in der Fig. 3 gezeichneten Kupplungsstellung durch ein Verschieben der Klauenmuffe in die ausgekuppelte Stellung nach der Fig. 4 verlagert, in der die Antriebsverbindung zwischen der Presswalze 7 und dem Kettenrad 12 unterbrochen ist, sodass die Presswalze 7 frei drehbar gehalten wird. Die Beaufschlagung des Schaltzylinders 16 wird vorteilhaft in Abhängigkeit vom Öffnungswinkel der Auswurfklappe 4 gesteuert und kann gegen eine Rückstellkraft erfolgen, um eine zweiseitige Beaufschlagung des Schaltzylinders 16 zu vermeiden. Über einen entsprechenden Sensor kann der Öffnungswinkel erfasst werden, bei dem der Schaltzylinder 16 beaufschlagt werden soll. Wird die Auswurfklappe 14 nach dem Ausrollen des Rundballens 8 aus dem Gehäuse 2 wieder geschlossen, so wird auch die Schaltkupplung 14 wieder geschlossen, sodass die endseitige Presswalze 7 der Auswurfklappe 4 zusammen mit den übrigen Presswalzen 6 zur Bildung eines neuen Halmgutwickels angetrieben wird.

## Patentansprüche

1. Rundballenpresse für Halmgut mit einem auf einem Fahrgestell (1) angeordneten Pressgehäuse (2), das einen fahrgestellfesten Gehäuseteil (3) und eine an diesem Gehäuseteil (3) um eine obere Anlenkachse (5) aufschwenkbar gelagerte Auswurfklappe (4) aufweist, mit auf den fahrgestellfesten Gehäuseteil (3) und die Auswurfklappe (4) verteilten, eine Presskammer umfangsseitig begrenzenden, mit einem Antrieb verbundenen Presswalzen (6, 7) und mit einer Einrichtung zum Ummanteln der gepressten Halmgutballen mit einer Hülle (13), **dadurch gekennzeichnet, dass** die eine Auswurföffnung für den ummantelten Halmgutballen begrenzende Presswalze (7) der Auswurfklappe (4) über eine Schaltkupplung (14) vom Antrieb abkuppelbar ist.

2. Rundballenpresse nach Anspruch 1, **dadurch gekennzeichnet, dass** die Schaltkupplung (14) für die die Auswurföffnung begrenzende Presswalze (7) von einem den Öffnungswinkel der Auswurfklappe (4) erfassenden Sensor gesteuert ist.

## Claims

1. Round baling press for straw, comprising a press housing (2) which is arranged on a travelling mechanism (1) and has a housing part (3) fixed to the travelling mechanism and a discharge flap (4) which is mounted on this housing part (3) so as to be able to pivot open about an upper articulation spindle (5), comprising press rollers (6, 7) which are distributed onto the housing part (3) fixed to the travelling mechanism and onto the discharge flap (4), define a press chamber on the circumferential side and are connected to a drive, and comprising a device for covering the pressed straw bales in a wrapping (13), **characterised in that** the press roller (7) of the discharge flap (4) defining a discharge opening for the covered straw bale can be decoupled from the drive by means of a shifting clutch (14).

2. Round baling press as claimed in claim 1, **characterised in that** the shifting clutch (14) for the press roller (7) defining the discharge opening is controlled by a sensor which detects the opening angle of the discharge flap (4).

## Revendications

1. Presse à balles rondes pour de la paille, avec un boîtier de presse (2) disposé sur un châssis roulant (1), lequel boîtier comporte une partie de boîtier (3) solidaire du châssis roulant et une trappe d'éjection (4) montée au niveau de ladite partie de boîtier (3) de manière à pouvoir pivoter autour d'un axe d'articulation (5) supérieur, avec des cylindres de pressage (6, 7), répartis sur la partie de boîtier (3) solidaire du châssis roulant et sur la trappe d'éjection (4), délimitant une chambre de pressage côté périphérie et reliés à un entraînement, et avec un dispositif servant à envelopper d'une enveloppe (13) les balles de paille pressées, **caractérisée en ce que** le cylindre de pressage (7), délimitant une ouverture d'éjection pour la balle de paille enveloppée, de la trappe d'éjection (4), peut être découplé de l'entraînement par l'intermédiaire d'un couplage de commutation (14) .

2. Presse à balles rondes selon la revendication 1, **caractérisée en ce que** le couplage de commutation (14) pour le cylindre de pressage (7) délimitant l'ouverture d'éjection est commandé par un capteur détectant l'angle d'ouverture de la trappe d'éjection (4).
